# EUROPÄISCHE PATENTSCHRIFT

(11) **EP 2 605 939 B1**
(45) Veröffentlichungstag und Bekanntmachung des Hinweises auf die Patenterteilung: **21.09.2016**
(21) Anmeldenummer: 11736106.3
(22) Anmeldetag: 27.07.2011
(51) Int. Cl.: B60S 1/04

(54) **SCHEIBENWISCHVORRICHTUNG**
WINDSHIELD WIPING DEVICE
DISPOSITIF D'ESSUIE-GLACE

(30) Priorität: 20.08.2010 DE 102010039577
(43) Veröffentlichungstag der Anmeldung: 26.06.2013
(73) Patentinhaber: Robert Bosch GmbH, 70442 Stuttgart (DE)
(72) Erfinder: VAN DE ROVAART, Robert-Jan, 77815 Buehl-Neusatz (DE); HEINRICH, Laurent, F-67400 Illkirch-Graffenstaden (FR)
(86) Internationale Anmeldenummer: PCT/EP2011/062903
(87) Internationale Veröffentlichungsnummer: WO 2012/022592

(56) Entgegenhaltungen:
- EP-A2- 2 127 967
- DE-A1- 3 116 821
- DE-A1- 19 809 630
- DE-A1-102006 015 240
- US-A1- 2003 010 164

## Beschreibung

Die vorliegende Erfindung betrifft eine Scheibenwischvorrichtung für ein Kraftfahrzeug, mit einem Wischermotor und mindestens einem Wischerlager, in welchem eine Wischerwelle gelagert ist, die zur Betätigung mindestens eines mit der Wischerwelle verbundenen Wischerarms über den Wischermotor antreibbar ist, und mit einer Befestäigungsanordnung zur Anwendung der Scheibenwischvorrichtung an eine Karosserie des Kraftfahrzeuges, wobei die Befestigungsanordnung einen Motorhalter umfasst, an welchem der Wischermotor befestigbar ist.

### Stand der Technik

Eine solchen Scheibenwischvorrichtung bzw. eine solche Befestigungsanordnung ist beispielsweise aus dem Dokument DE 10 2006 015 240 A1 bekannt. Darin wird eine Scheibenwischvorrichtung für ein Kraftfahrzeug vorgeschlagen, welche eine Platine sowie drei verschiedene Befestigungsmittel aufweist. Mit den ersten beiden Befestigungsmitteln wird die Motorplatine mit dem Wischermotor verbunden. Das dritte Befestigungsmittel ist beabstandet von den ersten beiden Befestigungsmitteln angeordnet und ist mehrteilig ausgebildet, wobei ein Verdrehen zweier der Teile zueinander ein Verkippen um eine durch die beiden Befestigungsmittel gebildete Achse hervorruft. Der Aufbau dieses dritten Befestigungselementes ist jedoch sehr aufwendig.

Ein alternativer Vorschlag im Stand der Technik sieht vor, eine sogenannte Z-Verstellung vorzusehen, um eine Wischerwellenorientierung zur Windschutzscheibe beim Einbau der Scheibenwischvorrichtung in die Karosserie zu korrigieren. Eine falsche Orientierung kann erhebliche Wischqualitätsprobleme zur Folge haben, z.B. Rattern, Quietschen, Brummen oder Wischfehler. Die besagte Z-Verstellung besteht aus einem Kunststoffwinkel, in den zwei Verstellbleche verschiebbar eingesetzt sind. In den Verstellblechen sind Öffnungen ausgebildet, die senkrecht zu der Verstellrichtung übereinstimmend mit in den Seitenflächen der Kunststoffwinkel ausgebildeten Langlöchern ausgebildet sind. Durch Verschieben der Verschiebebleche in Verschieberichtung entlang der Seitenflächen des Kunststoffwinkels ist es möglich, die jeweiligen Anschraubpunkte der Z-Verstellung relativ zu der Karosserie des Fahrzeuges zu verändern. So kann beispielsweise die Z-Verstellung im Fahrzeug höher oder tiefer angeschraubt werden, um so die Orientierung der Wischerwellen relativ zur Windschutzscheibe beeinflussen zu können.

Zur Montage wird die Z-Verstellung daher zunächst mit einem niedrigen Moment an die Scheibenwischvorrichtung angeschraubt, um die Möglichkeit eines leichten Verschiebens im Bereich der Schraubpunkte weiter zu ermöglichen. Dann wird eine Seite der Z-Verstellung zunächst an der Karosserie in die richtige Höhe ausgerichtet und an der Karosserie fixiert. Im Anschluss wird daran ausgerichtet auch das zweite Verstellblech mit der Scheibenwischvorrichtung in gewünschter Position verbunden. Wie aus der Schilderung der Montage bereits deutlich wird, ist letztere relativ aufwendig und fehleranfällig.

Es ist daher Aufgabe der vorliegenden Erfindung, eine Verstellung zu entwickeln, die einen einfacheren Aufbau aufweist und dabei keine Einbußen bezüglich der Verstellbarkeit mit sich bringt.

### Offenbarung der Erfindung

Diese Aufgabe wird erfindungsgemäß dadurch gelöst, dass der Verstellmechanismus durch einen Grundkörper gebildet ist, welcher eine Querschnittsfläche in der Form eines Vieleckes aufweist, dessen Seitenflächen von einer gemeinsamen Drehachse unterschiedlich beabstandet ausgebildet sind.

Durch die Möglichkeit einer Korrektur der Orientierung des Wischerlagers relativ zu der Windschutzscheibe des Kraftfahrzeuges mittels eines Verstellmechanismus wird die Montage und Fixierung der Scheibenwischvorrichtung an der Fahrzeugkarosserie wesentlich erleichtert, da Positionierungs- und Fertigungsungenauigkeiten durch einfache Betätigung des Verstellmechanismus ausgeglichen werden können. Einem Rattern oder Quietschen oder Brummen der Wischerarme auf der Windschutzscheibe des Kraftfahrzeuges kann so auf einfache Weise entgegengewirkt werden. Stimmt die Position der Wischerarme relativ zu der Windschutzscheibe nicht genau überein, so muss ein Monteur lediglich den Verstellmechanismus um die Grundposition des Verstellmechanismus festlegende gemeinsame Drehachse drehen, um so den Abstand zwischen dem Motorhalter und der Fahrzeugkarosserie zu verändern. Diese Veränderung führt zu einer Verkippung dees Motorhalters und somit gleichzeitig einer Verkippung einer durch die Lagerwellen gebildeten Ebene, was gleichbedeutend mit einer Veränderung der Position der Wischerarme relativ zur Windschutzscheibe des Kraftfahrzeuges ist. So ist es in einer Werkstatt auch zu einem späteren Zeitpunkt im Zuge von Wartungsarbeiten möglich, einen von dem Wischerarm auf die Windschutzscheibe aufgebrachten werksseitig eingestellten Wischerdruck durch einfache Verstellung des Verstellmechanismusses zu verändern und optimal unter Berücksichtigung von Fertigungs- und Montagetoleranzen erneut einzustellen.

Durch die unterschiedliche Beabstandung der Seitenflächen des Grundkörpers von dessen Drehachse wird eine besonders stabile Ausrichtung des Motorhalters über die gesamte Längserstreckung des Grundkörpers erreicht. So kann einem ungewollten Verkippen des Verstellmechanismus entlang seiner Längserstreckung aufgrund der durch die jeweilige Seitenfläche gebildete große Auflagefläche erfolgreich entgegengewirkt werden.

Dabei können die Beabstandungen so gewählt werden, dass der Abstand der Seitenflächen relativ zu der gemeinsamen Drehachse oder einer Referenzseitenfläche genau einer Korrektur zur einer Nominalposition des Verstellmechanismus entspricht. Die Beabstandungen der Seitenflächen können beispielsweise so variiert werden, dass zwischen zwei Korrekturpositionen jeweils eine Nominalposition vorgesehen ist, in der keine Korrektur der Beabstandung des Motorhalters relativ zur Fahrzeugkarosserie erfolgt.

Durch entsprechende Ausbildung der Beabstandungen der Seitenflächen relativ zur gemeinsamen Drehachse können durch den Verstellmechanismus Verstellwege von +10 mm bis -10 mm, bevorzugt +6 mm bis -6 mm, noch bevorzugter +3 mm bis -3 mm und zumindest +1 mm bis -1 mm realisiert werden.

Zur Maximierung der Korrekturmöglichkeit des Verstellmechanismus bei gleichzeitig möglichst geringer Bauhöhe des Verstellmechanismus kann in einem Ausführungsbeispiel ein Langloch in dem Verstellmechanismus ausgebildet sein, in welchem dessen Drehachse angeordnet ist. Bei Verdrehen des Verstellmechanismus kann die Drehachse entlang des in dem Verstellmechanismus ausgebildeten Langlochs wandern, wodurch auch größere Stellwege oder Beabstandungsunterschiede zwischen zwei Seitenflächen des Vieleckes überwunden werden können.

Um zu verhindern, dass ein Verstellen der Beabstandung von Motorhalter und Fahrzeugkarosserie zu einem Verkippen einer senkrecht zu den Ausrichtungen der Lagerwellen ausgebildeten Ebene führt, sind in einem Ausführungsbeispiel die Verstell- oder Verkippebene des Verstellmechanismus in gleicher Orientierung ausgerichtet wie eine durch die Wischerlager gebildete Ebene.

Zur Vereinfachung der Montage der Scheibenwischvorrichtung ist in einem Ausführungsbeispiel vorgesehen, den Motorhalter so relativ zum Vertsellmechanismus anzuordnen, dass eine Anschraubrichtung des Verstellmechanismus und eine Anschraubrichtung des Motorhalters zur Befestigung des Wischermotors in einer gemeinsamen Verschraubungsebene liegen. Durch diese Maßnahme wird erreicht, dass bei der Montage ein Montagewerkzeug nur in einer Montagerichtung bzw. Ebene verfahren werden muss. Dies führt zu einer größeren Flexibilität bezüglich der Abmessungen der Bauteile, da für die Verfahrbarkeit der Montagewerkzeuge nur in einer Ebene Freisparungen vorzusehen sind.

Besonders einfach wird eine entsprechende Montage der Scheibenwischvorrichtung, wenn die Verschraubungsebene im Wesentlichen vertikal zur Haupterstreckung der Fahrzeugkarosserie ausgerichtet ist. Hierdurch wird eine besonders gute Zugänglichkeit der Verschraubungspunkte für einen Monteur der Scheibenwischvorrichtung bereitgestellt.

Um eine möglichst stabile Anbindung der Scheibenwischvorrichtung bei gleichzeitiger Korrekturmöglichkeit bereitzustellen, wird vorgeschlagen, die Verschraubungsebene unterhalb der durch die Wischerlager gebildeten Ebene vorzusehen.

### Kurze Beschreibung der Zeichnungen

Weitere vorteilhafte Ausführungsbeispiele sind in den Unteransprüchen sowie den im folgenden näher erläuterten Zeichnungen zu entnehmen. Darin zeigen:
- Figur 1: eine perspektivische Teilansicht einer erfindungsgemäßen Scheibenwischvorrichtung mit Verstellmechanismus;
- Figur 2: eine Teildarstellung einer Scheibenwischvorrichtung gemäß Figur 1, welche an die Fahrzeugkarosserie angebunden ist;
- Figur 3: eine schematische Darstellung des Funktionsprinzips des Verstellmechanismus; und
- Figur 4: einen Verstellmechanismus mit Langloch.

### Ausführungsformen der Erfindung

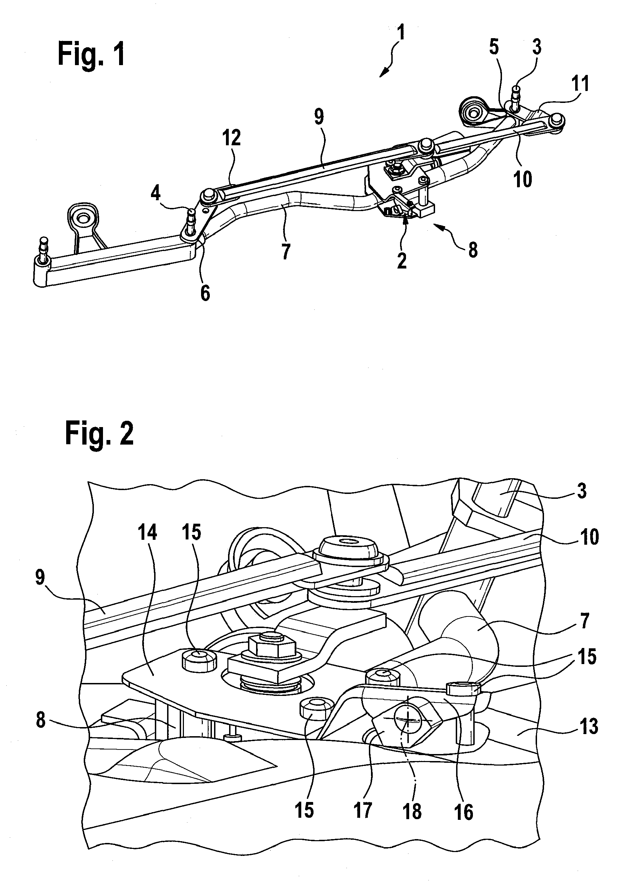

Die Figur 1 zeigt eine perspektivische Teilansicht eine erfindungsgemäßen Scheibenwischvorrichtung 1 mit einem Verstellmechanismus 2.

An der Scheibenwischvorrichtung 1 ist eine erste Wischerwelle 3 sowie eine zweite Wischerwelle 4 vorgesehen, die im montierten Zustand aus einer Fahrzeugkarosserie 13 herausragen und mit einer durch eine Windschutzscheibe des Kraftfahrzeuges gebildeten Ebene einen Kippwinkel α einschließen. Die Wischerwellen 3, 4 sind jeweils in einem ersten bzw. zweiten Wischerlager 5, 6 gelagert und durch ein Trägerrohr 7 miteinander verbunden. An dem Trägerrohr 7 ist zwischen dem ersten Wischerlager 3 und dem zweiten Wischerlager 4 ein Wischermotor 8 befestigt, dessen Abtriebswelle über Schubstangen 9, 10 und Kurbeln 11, 12 die Wischerwellen 3, 4 antreiben. Der Wischermotor 8 wird hier im Wesentlichen durch das Trägerrohr 7 gehalten.

Die Fixierung der Scheibenwischvorrichtung 1 aus der Fahrzeugkarosserie erfolgt über eine Befestigungsanordnung, wie näher in Figur 2 gezeigt. Die Befestigungsanordnung umfasst einen Motorhalter 14, an welchem der Wischermotor 8 über drei Befestigungsschrauben 15 fixiert ist. An dem Motorhalter 14 ist ein Steg 16 ausgebildet, der mit seinem unteren Bereich auf einen drehbar mit dem Motorhalter verbundenen Verstellmechanismus 17 aus Kunststoff aufliegt und an seinem freien Ende mit einerweiteren Befestigungsschraube 15 in seiner Position fixierbar bzw. fixiert ist.

Der Verstellmechanismus 17 ist durch einen Grundkörper gebildet, welcher eine Querschnittsfläche in der Form eines Vielecks aufweist, dessen Seitenflächen 19, 20, unterschiedlich beabstandet 21 von einer gemeinsamen Drehachse 18 ausgebildet sind.

Zur Korrektur einer Orientierung der Wischerlager 5, 6 relativ zu der Windschutzscheibe des Kraftfahrzeuges kann durch einfaches Verdrehen des Verstellmechanismus 17 ein Abstand zwischen dem Motorhalter 14 und der Fahrzeugkarosserie 13 gestuft eingestellt werden.

Durch Verdrehen des Verstellmechanismus 17 wird zum einen der Abstand zwischen Fahrzeugkarosserie 13 und Motorhalter 14 verändert, was aber zum anderen gleichzeitig dazu führt, dass der durch die Windschutzscheibe und eine durch die Wischerwellen 5, 6 gebildete Ebene eingeschlossene Kippwinkel α verändert wird.

Mit dem gezeigten Verstellmechanismus 17 sind Verstellwege von ± 6 mm realisierbar. Die Verstellebene des Verstellmechanismus ist hier in gleicher Orientierung ausgerichtet, wie die durch die Wischerlager 5, 6 gebildete Ebene. Wie in Figur 2 gut zu sehen ist, ist die Anschraubrichtung sowohl des Verstellmechanismus 17 als auch die Anschraubrichtung der Befestigungsschrauben 15 des Motorhalters 14 zur Befestigung des Wischermotors 8 in einer gemeinsamen Verschraubungsebene angeordnet. In diesem Ausführungsbeispiel ist die Verschraubungsebene im Wesentlichen vertikal zur Erstreckung der Fahrzeugkarosserie 13 ausgerichtet und unterhalb der durch die Wischerlager 5, 6 gebildeten Ebene angeordnet.

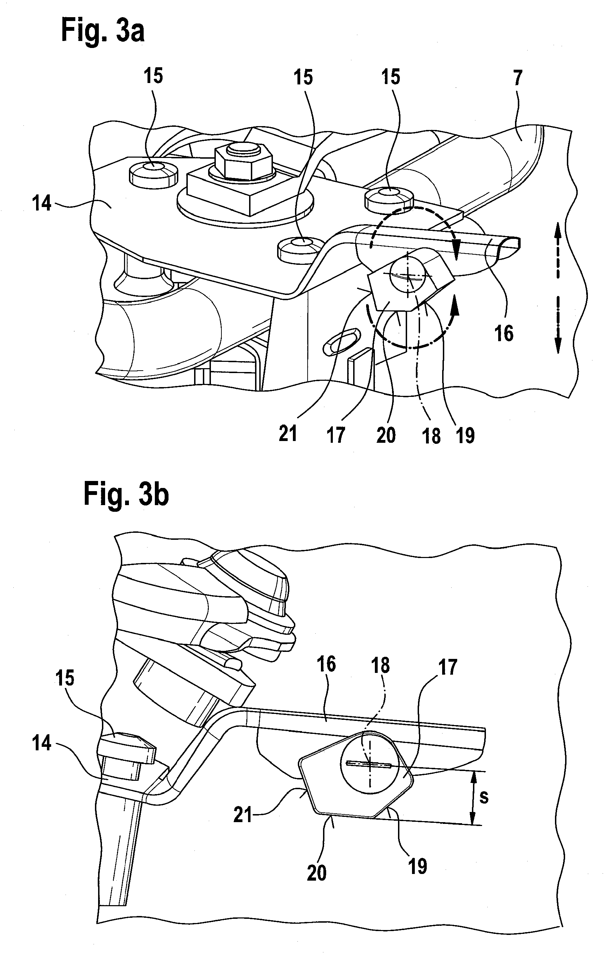

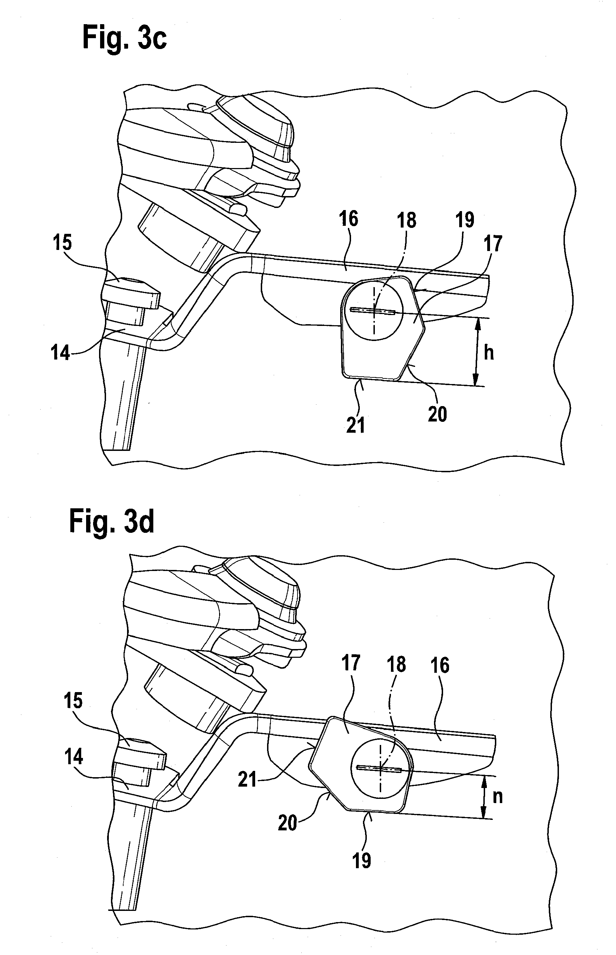

Das soeben angesprochene Verstellprinzip wird durch die Darstellung in der Figur 3 näher erläutert.

In Figur 3a ist zunächst das Verstellprinzip des Verstellmechanismus 17 eines Ausführungsbeispiels der vorliegenden Erfindung gezeigt. Der Verstellmechanismus 17 befindet sich in der dargestellten Position in einer sogenannten Nominalposition. Wird der Verstellmechanismus 17 wie mit dem gestrichelten Pfeil angezeigt im Uhrzeigersinn gedreht, so kommt die Seitenfläche 19 an der Fahrzeugkarosserie 13 zur Anlage, welche einen geringeren Abstand zur Drehachse 18 des Verstellmechanismus 17 hat als die Seitenfläche 20 des Verstellmechanismus 17. Als Folge wird ein Verstellweg des Verstellmechanismus um Δs realisiert, der der Differenz des Abstandes der Seitenflächen 19 und 20 zu der zentralen Drehachse entspricht. Im vorliegenden Fall senkt sich somit die gemeinsame Drehachse 18 und damit auch der Steg 16 des Motorhalters 14 nach unten ab, was zu einer Verkippung des Motorhalters 14 und damit zu einer Vergrößerung des zwischen der Windschutzscheibe und der durch die Wischerlager 5, 6 gebildeten Ebene eingeschlossenen Kippwinkel α entspricht.

Wird der Verstellmechanismus 17 hingegen gegen den Uhrzeigersinn um die gemeinsame Drehachse 18 wie mit dem Pfeil in Punkt-Strichlinien angedeutet gedreht, so kommt die Seitenfläche 21 an der Fahrzeugkarosserie 13 zur Anlage, was bedeutet, dass sich die gemeinsame Drehachse nach oben wie mit dem ebenfalls in Punkt-Strichlinien gezeigten Pfeil angedeutet bewegt. Dies führt zu einer Verkippung des Motorhalters 14 nach unten und somit zu einer Verkleinerung des zwischen der Ebene der Windschutzscheibe und der von den Wischerlagern 5, 6 gebildeten Ebene eingeschlossenen Verkippwinkels α.

Die soeben beschriebene Höhenänderung durch Verdrehen des Verstellmechanismus 17 wird in den Figuren 3b bis 3d nochmals verdeutlicht. In 3b befindet sich der Verstellmechanismus 17 in Nominalposition. Die Beabstandung bzw. der Verstellweg s zwischen der gemeinsamen Drehachse 18 des Verstellmechanismus und der Auflagefläche zur Fahrzeugkarosserie 13 ist hier mit Pfeilen angedeutet. In Figur 3c wurde der Verstellmechanismus gegen den Uhrzeigersinn so gedreht, dass nunmehr die Seitenfläche 21 des Verstellmechanismus 17 an der Fahrzeugkarosserie 13 zur Anlage kommt. Der Verstellweg h ist größer als der Verstellweg s gemäß Figur 3b. Figur 3d zeigt hingegen eine Stellung des Verstellmechanismus 17 in einer Position, in der der Verstellmechanismus 17 von der Nominalposition mit dem Uhrzeigersinn so gedreht wurde, dass die Seitenflächen 19 des Verstellmechanismus 17 nunmehr mit der Fahrzeugkarosserie 13 in Anlage kommt. Als Resultat stellt sich ein Verstellweg n gemäß Figur 3d ein, der niedriger ist als der Verstellweg s in Nominalposition.

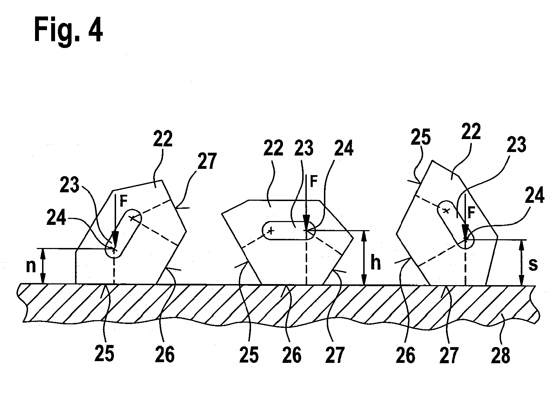

Figur 4 zeigt ein alternatives Ausführungsbeispiel der vorliegenden Erfindung mit einem Verstellmechanismus 22. Das Grundprinzip dieses Verstellmechanismus 22 ist mit dem des Verstellmechanismus 17 gemäß der Figuren 1 bis 3 identisch, nur ist in dem Verstellmechanismus 22 ein Langloch 23 ausgebildet, in dem die Drehachse 24 des Verstellmechanismus 22 angeordnet ist. In dem Langloch 23 kann sich die Drehachse frei bewegen und sich innerhalb des Langlochs bei Verdrehen des Verstellmechanismus 22 hin- und herbewegen, was dazu führt, dass größere Verstellwege n, h, s über eine Drehung des Verstellmechanismus 22 mit oder gegen den Uhrzeigersinn realisierbar sind.

In dem in Figur 4 gezeigten Ausführungsbeispiel befindet sich der Verstellmechanismus in Nominalposition, wenn die Seitenflächen 27 des Verstellmechanismus 22 an einer Fahrzeugkarosserie 28 zur Anlage kommt. Steht eine Seitenfläche 26 des Verstellmechanismus 22 mit der Fahrzeugkarosserie 28 in Verbindung, so ist eine Position eingestellt, in der der Motorhalter nach oben gedrückt wird und somit der zwischen der Ebene der Windschutzscheibe und der durch die Wischerlager gebildeten Ebene eingeschlossene Verstellwinkel α kleiner wird. Kommt hingegen eine Seitenfläche 25 des Verstellmechanismus 22 an der Fahrzeugkarosserie 28 zur Anlage, so stellt sich der Verstellweg n ein, welcher dazu führt, dass sich der Kippwinkel α vergrößert.

Die Montage der erfindungsgemäßen Scheibenwischvorrichtung 1 erfolgt wie folgt:
Zunächst ermittelt ein Monteur bei der Montage der Scheibenwischvorrichtung 1 an das Kraftfahrzeug die optimale Position des Verstellmechanismus 17, 22 in Abhängigkeit des zwischen der Ebene der Windschutzscheibe und der durch die Wischerlager 5, 6 gebildeten Ebene eingeschlossenen Wischwinkels α. Der Verstellmechanismus 17, 22 wird entsprechend in die sich daraus ergebene Position verdreht. Anschließend wird der Wischermotor 8 mit dem Motorhalter 14 unter Einschluss des Trägerrohrs 7 mittels der Befestigungsschrauben 15 mit der Fahrzeugkarosserie 13, 28 verschraubt. Ferner wird eine weitere Befestigungsschraube 15 in das freie Ende des Steges 16 eingesetzt und verschraubt, um den Steg 16 und den Verstellmechanismus 17, 22 in deren Positionen zu fixieren. Anschließend wird der Anstellwinkel der Wischblätter nochmals überprüft, um ein Rattern oder Quietschen der Wischerarme auf der Windschutzscheibe des Kraftfahrzeuges zu verhindern. Ist der Anstellwinkel nach der Montage oder nach mehrstündigem Gebrauch nicht mehr korrekt, kann durch einfaches Verstellen des Verstellmechanismus 22 auch eine Korrektur des Anstellwinkels zu einem späteren Zeitpunkt in der Werkstatt auf einfache Weise durchgeführt werden.

## Patentansprüche

1. Scheibenwischvorrichtung (1) für ein Kraftfahrzeug, mit einem Wischermotor (8) und mindestens einem Wischerlager (5, 6), in welchem eine Wischerwelle (3, 4) gelagert ist, die zur Betätigung mindestens eines mit der Wischerwelle (3, 4) verbundenen Wischerarmes über den Wischermotor (8) antreibbar ist, und mit einer Befestigungsanordnung zur Anbindung der Scheibenwischvorrichtung (1) an eine Karosserie (13) des Kraftfahrzeuges, wobei die Befestigungsanordnung einen Motorhalter (14) umfasst, an welchem der Wischermotor (8) befestigbar ist, wobei die Befestigungsanordnung einen mit dem Motorhalter (14) drehbar verbundenen Verstellmechanismus (17, 22) umfasst, um zur Korrektur einer Orientierung des Wischerlagers (5, 6) relativ zu einer Windschutzscheibe des Kraftfahrzeuges über den Verstellmechanismus (17, 22) einen Abstand zwischen dem Motorhalter (14) und der Fahrzeugkarosserie (13) durch einfaches Verdrehen des Verstellmechanismus (17, 22) gestuft einzustellen, **dadurch gekennzeichnet, dass** der Verstellmechanismus (17, 22) durch einen Grundkörper gebildet ist, welcher eine Querschnittsfläche in der Form eines Vieleckes aufweist, dessen Seitenflächen (19, 20, 21, 25, 26, 27) von einer gemeinsamen Drehachse (18, 24) unterschiedlich beabstandet ausgebildet sind.

2. Scheibenwischvorrichtung (1) nach Anspruch 1, **dadurch gekennzeichnet, dass** der Abstand der Seitenflächen (19, 20, 21, 25, 26, 27) relativ zu der gemeinsamen Drehachse (18, 24) oder einer Referenzseitenfläche (20, 27) eine Korrektur zu einer Nominalposition des Verstellmechanismus (17, 22) entspricht.

3. Scheibenwischvorrichtung (1) nach einem der Ansprüche 1 bis 2, **dadurch gekennzeichnet, dass** der Verstellmechanismus (17, 22) Verstellwege (s, h, n) von +10 mm bis -10 mm, bevorzugt +6 mm bis -6 mm, noch bevorzugter +3 mm bis -3 mm und zumindest +1 mm bis -1 mm realisiert.

4. Scheibenwischvorrichtung (1) nach einem der vorhergehenden Ansprüche, **dadurch gekennzeichnet, dass** zur Maximierung der Korrektur des Verstellmechanismus (17, 22) ein Langloch (23) in dem Verstellmechanismus (17, 22) ausgebildet ist, in welchem die gemeinsame Drehachse (18, 24) angeordnet ist.

5. Scheibenwischvorrichtung (1) nach einem der vorhergehenden Ansprüche, **dadurch gekennzeichnet, dass** eine Verstell- oder Verkippebene des Verstellmechanismus (17, 22) in gleicher Orientierung ausgerichtet ist wie eine durch die Wischerlager (5, 6) gebildete Ebene.

6. Scheibenwischvorrichtung (1) nach einem der vorhergehenden Ansprüche, **dadurch gekennzeichnet, dass** der Verstellmechanismus (17, 22) aus Kunststoff ausgebildet ist.

7. Scheibenwischvorrichtung (1) nach einem der vorhergehenden Ansprüche, **dadurch gekennzeichnet, dass** der Motorhalter (14) so relativ zum Vertsellmechanismus angeordnet ist, dass eine Anschraubrichtung des Verstellmechanismus (17,22) und eine Anschraubrichtung des Motorhalters (14) zur Befestigung des Wischermotors (8) in einer gemeinsamen Verschraubungsebene liegen.

## Claims

1. Windscreen wiping device (1) for a motor vehicle, with a wiper motor (8) and at least one wiper bearing (5, 6) in which a wiper shaft (3, 4) is mounted, which wiper shaft is driveable via the wiper motor (8) in order to actuate at least one wiper arm connected to the wiper shaft (3, 4), and with a fastening arrangement for connecting the windscreen wiping device (1) to a body (13) of the motor vehicle, wherein the fastening arrangement comprises a motor holder (14) to which the wiper motor (8) is fastenable, wherein the fastening arrangement comprises an adjustment mechanism (17, 22), which is connected rotatably to the motor holder (14), in order to adjust a distance between the motor holder (14) and the vehicle body (13) in a stepped manner by simple rotation of the adjustment mechanism (17, 22) so as to correct an orientation of the wiper bearing (5, 6) relative to a windscreen of the motor vehicle via the adjustment mechanism (17, 22), **characterized in that** the adjustment mechanism (17, 22) is formed by a basic body which has a cross-sectional area in the form of a polygon, the side surfaces (19, 20, 21, 25, 26, 27) of which are formed at differing distances from a common axis of rotation (18, 24).

2. Windscreen wiping device (1) according to Claim 1, **characterized in that** the distance of the side surfaces (19, 20, 21, 25, 26, 27) relative to the common axis of rotation (18, 24) or to a reference side surface (20, 27) corresponds to a correction to a nominal position of the adjustment mechanism (17, 22).

3. Windscreen wiping device (1) according to either of Claims 1 and 2, **characterized in that** the adjustment mechanism (17, 22) realises adjustment distances (s, h, n) of +10 mm to -10 mm, preferably +6 mm to -6 mm, even more preferably +3 mm to -3 mm and at least +1 mm to -1 mm.

4. Windscreen wiping device (1) according to one of the preceding claims, **characterized in that**, in order to maximize the correction of the adjustment mechanism (17, 22), an elongated hole (23) is formed in the adjustment mechanism (17, 22), in which elongated hole the common axis of rotation (18, 24) is arranged.

5. Windscreen wiping device (1) according to one of the preceding claims, **characterized in that** an adjustment or tilting plane of the adjustment mechanism (17, 22) is oriented in the same orientation as a plane formed by the wiper bearings (5, 6).

6. Windscreen wiping device (1) according to one of the preceding claims, **characterized in that** the adjustment mechanism (17, 22) is formed from plastic.

7. Windscreen wiping device (1) according to one of the preceding claims, **characterized in that** the motor holder (14) is arranged relative to the adjustment mechanism in such a manner that a screwing-on direction of the adjustment mechanism (17, 22) and a screwing-on direction of the motor holder (14) for fastening the wiper motor (8) lie in a common screwing plane.

## Revendications

1. Dispositif d'essuie-glace (1) pour un véhicule automobile, comprenant un moteur d'essuie-glace (8) et au moins un palier d'essuie-glace (5, 6) dans lequel est supporté un arbre d'essuie-glace (3, 4) qui, pour l'actionnement d'au moins un bras d'essuie-glace connecté à l'arbre d'essuie-glace (3, 4), peut être entraîné par le biais du moteur d'essuie-glace (8), et comprenant un agencement de fixation pour la liaison du dispositif d'essuie-glace (1) à une carrosserie (13) du véhicule automobile, l'agencement de fixation comprenant un support de moteur (14) sur lequel le moteur d'essuie-glace (8) peut être fixé, l'agencement de fixation comprenant un mécanisme de réglage (17, 22) connecté de manière solidaire en rotation au support de moteur (14), afin d'ajuster de manière progressive, pour corriger l'orientation du palier d'essuie-glace (5, 6) par rapport à un pare-brise de véhicule automobile, par le biais du mécanisme de réglage (17, 22), une distance entre le support de moteur (14) et la carrosserie du véhicule (13) par une simple rotation du mécanisme de réglage (17, 22), **caractérisé en ce que** le mécanisme de réglage (17, 22) est formé par un corps de base qui présente une surface en section transversale ayant la forme d'un polygone dont les faces latérales (19, 20, 21, 25, 26, 27) sont réalisées de manière espacée différemment d'un axe de rotation commun (18, 24).

2. Dispositif d'essuie-glace (1) selon la revendication 1, **caractérisé en ce que** la distance des faces latérales (19, 20, 21, 25; 26, 27) par rapport à l'axe de rotation commun (18, 24) ou à une face latérale de référence (20, 27), correspond à une correction d'une position nominale du mécanisme de réglage (17, 22).

3. Dispositif d'essuie-glace (1) selon l'une quelconque des revendications 1 à 2, **caractérisé en ce que** le mécanisme de réglage (17, 22) réalise des courses de réglage (s, h, n) de +10 mm à -10 mm, de préférence de +6 mm à -6 mm, encore plus préférablement de +3 mm à -3 mm et d'au moins +1 mm à -1 mm.

4. Dispositif d'essuie-glace (1) selon l'une quelconque des revendications précédentes, **caractérisé en ce que** pour maximiser la correction du mécanisme de réglage (17, 22), un trou oblong (23) est réalisé dans le mécanisme de réglage (17, 22), dans lequel est disposé l'axe de rotation commun (18, 24).

5. Dispositif d'essuie-glace (1) selon l'une quelconque des revendications précédentes, **caractérisé en ce qu'**un plan de réglage ou de basculement du mécanisme de réglage (17, 22) est orienté suivant la même orientation qu'un plan formé par le palier d'essuie-glace (5, 6).

6. Dispositif d'essuie-glace (1) selon l'une quelconque des revendications précédentes, **caractérisé en ce que** le mécanisme de réglage (17, 22) est réalisé en plastique.

7. Dispositif d'essuie-glace (1) selon l'une quelconque des revendications précédentes, **caractérisé en ce que** le support de moteur (14) est disposé par rapport au mécanisme de réglage de telle sorte qu'une direction de vissage du mécanisme de réglage (17, 22) et une direction de vissage du support de moteur (14) pour la fixation du moteur d'essuie-glace (8) soient situées dans un plan de vissage commun.
